# EUROPEAN PATENT APPLICATION

(11) **EP 4 852 265 A1**
(43) Date of publication of application: **09.12.2026**
(21) Application number: 25181394.5
(22) Date of filing: 06.06.2025
(51) Int. Cl.: H02J 3/00, H02J 3/32, H02J 3/38, H02J 7/00, H02J 9/06

(54) **AN ELECTRICAL SYSTEM AND A METHOD FOR CONTROLLING A PLURALITY OF HARD-PARALLEL CONNECTED UNINTERRUPTIBLE POWER SUPPLY SYSTEMS WITH AN IMPEDANCE ISOLATED SINGLE CONVERTER**

(71) Applicant: ABB SCHWEIZ AG, 5400 Baden (CH)
(72) Inventor: NGO, Tung, 4112 Napier (NZ); SINGH, Jagmeet, 2105 Totara Heights (NZ); KOZHIPARAMBIL KUMARAN, Parthasaradhy, 4104 Napier (NZ); PATEL, Ravi, 4122 Hastings (NZ)
(74) Representative: Zimmermann & Partner Patentanwälte mbB

(57) **Abstract**

A method 300 for controlling a plurality of uninterruptible power supply systems having an impedance isolated single conversion topology connected in a hard-parallel configuration coupled to an electric grid and configured to protect an electric load, wherein each uninterruptible power supply system comprises an energy storage system, a power conversion system, a coupling transformer, a series reactor, switches, voltage and current sensors, and a system controller capable of providing demand response functionality, each uninterruptible power supply system being configured to implement an impedance isolated single converter topology configured to operate in a power conditioning mode and in an independent mode, the method comprising:
- for each uninterruptible power supply system in the plurality of uninterruptible power supply systems connected in the hard-parallel configuration, determining 302 a state of charge of the energy storage system and/or a voltage of the energy storage system using the voltage sensors;
- if for any uninterruptible power supply system in the plurality of uninterruptible power supply systems connected in the hard-parallel configuration the determined state of charge of the energy storage system and/or the voltage of the energy storage system is below a respective minimum hysteresis threshold and the grid voltage remains within acceptable operational limits, controlling 304 all the uninterruptible power supply systems in the plurality of uninterruptible power supply systems connected in the hard-parallel configuration to charge each respective energy storage system at a respective predetermined power setpoint to increase the state of charge and/or the voltage of the energy storage system.

## Description

### FIELD

The present disclosure relates to uninterruptible power supply systems having an impedance isolated single conversion topology in a hard parallel configuration, in particular capable of providing a demand response functionality and to methods for controlling a plurality of UPS systems having an impedance isolated single conversion topology in a hard-parallel configuration.

### BACKGROUND

An uninterruptible power supply (UPS) system provides electric power to a load.

An UPS system may have an Impedance Isolated Single Conversion (ZISC) topology.

An UPS system typically includes an energy storage system connected to a power conversion system. The energy storage system is charged using electric energy from an electric grid when the electric grid is able to provide enough power. In addition, the energy storage system provides electric energy to a load, in particular when the electric grid is not able to supply enough power towards the load.

In particular, the energy storage system is typically charged when the electric grid provides sufficient power and in case of an outage, the energy stored in the energy storage system is supplied towards the load.

A UPS system may compensate a disturbance in the voltage and/or current and/or power delivered by the grid. In power conditioning mode (PCM) the UPS system may deliver the appropriate amount of power to compensate for disturbance of the grid voltage while maintaining an electric connection to the grid through a series reactor. Undisturbed voltage and/or current and/or power is thereby ideally transferred to protected loads while an electrical connection to the grid is maintained via the series reactor.

In independent mode (IM), the UPS is disconnected from the grid and operates in island mode to supply power to protected loads.

The UPS system transitions to IM when the quality of the power supply voltage becomes very poor, such as in case of a voltage sag with significant magnitude and duration or in case of an open-circuit resulting in the absence of a connection to the grid.

In IM, the UPS controls the output voltage with given magnitude and frequency references to supply adequate power to the protected loads.

Multiple UPS systems, e.g. two or more UPS systems, may operate in parallel to increase the overall delivered power.

In a hard-parallel operation, the load current may be shared equally between each UPS unit.

In particular during PCM the UPS needs to reliably provide power with a fast response.

Typically, a UPS system and/or a plurality of UPS system in a hard-parallel configuration further provide a demand response functionality, where for example part of the power is supplied to the protected load by the energy storage system(s) of the UPS system(s) and part of the power is still supplied to the load by the electric grid.

A parallel operation of a plurality of UPS systems in a hard-parallel configuration typically results in circulating currents when the operation of the UPS systems is not sufficiently synchronized.

When operating a plurality of UPS systems connected in parallel, in particular when providing a demand response functionality, it is therefore beneficial to provide an improved synchronization to prevent or reduce circulating currents between the different UPS systems in the plurality of UPS systems connected in parallel.

### SUMMARY

The invention is defined by the independent claims. Dependent claims define further embodiments of the invention.

According to an aspect, a method is provided for controlling a plurality of uninterruptible power supply systems having an impedance isolated single conversion topology connected in a hard-parallel configuration coupled to an electric grid and configured to protect an electric load, wherein each uninterruptible power supply system comprises an energy storage system, a power conversion system, a coupling transformer, a series reactor, switches, voltage and current sensors, and a system controller capable of providing demand response functionality, each uninterruptible power supply system being configured to implement an impedance isolated single converter topology configured to operate in a power conditioning mode and in an independent mode, the method comprising:
- for each uninterruptible power supply system in the plurality of uninterruptible power supply systems connected in the hard-parallel configuration, determining a state of charge of the energy storage system and/or a voltage of the energy storage system using the voltage sensors;
- if for any uninterruptible power supply system in the plurality of uninterruptible power supply systems connected in the hard-parallel configuration the determined state of charge of the energy storage system and/or the voltage of the energy storage system is below a respective minimum hysteresis threshold and the grid voltage remains within acceptable operational limits, controlling all the uninterruptible power supply systems in the plurality of uninterruptible power supply systems connected in the hard-parallel configuration to charge each respective energy storage system at a respective predetermined power setpoint to increase the state of charge and/or the voltage of the energy storage system.

According to another aspect, an electrical system is provided comprising a plurality of uninterruptible power supply systems having an impedance isolated single conversion topology connected in a hard-parallel configuration configured to be coupled to an electric grid and configured to protect an electric load, wherein each uninterruptible power supply system comprises an energy storage system, a power conversion system, a coupling transformer, a series reactor, switches, voltage and current sensors, and a system controller capable of providing demand response functionality, each uninterruptible power supply system being configured to implement an impedance isolated single converter topology configured to operate in a power conditioning mode and in an independent mode, the system and the system controllers of the plurality of uninterruptible power supply systems configured such that:
- for each uninterruptible power supply system in the plurality of uninterruptible power supply systems connected in the hard-parallel configuration, a state of charge of the energy storage system and/or a voltage of the energy storage system is determined using the voltage sensors;
- if for any uninterruptible power supply system in the plurality of uninterruptible power supply systems connected in the hard-parallel configuration the determined state of charge of the energy storage system and/or the voltage of the energy storage system is below a respective minimum hysteresis threshold and the grid voltage remains within acceptable operational limits, all the uninterruptible power supply systems in the plurality of uninterruptible power supply systems connected in the hard-parallel configuration are controlled to charge each respective energy storage system at a respective predetermined power setpoint to increase the state of charge and/or the voltage of the energy storage system.

### BRIEF DESCRIPTION OF FIGURES

The accompanying drawings relate to embodiments of the disclosure and are described in the following:
FIG. 1 shows an Impedance Isolated Single Conversion topology uninterruptible power supply system according to embodiments of the present disclosure.
FIG. 1A shows a ZISC based UPS system operating in power conditioning mode according to embodiments of the present disclosure.
FIG. 1B shows a ZISC based UPS system operating in independent mode according to embodiments of the present disclosure.
FIG. 2 shows a plurality of ZISC based UPS systems in a hard-parallel configuration operating in power conditioning mode according to embodiments of the present disclosure.
FIG. 2A shows a plurality of ZISC based UPS systems in a hard-parallel configuration operating in power conditioning mode according to embodiments of the present disclosure.
FIG. 3 shows a method for controlling a plurality of uninterruptible power supply systems connected in a hard-parallel configuration according to embodiments of the present disclosure.

### DETAILLED DESCRIPTION

The expressions "in one embodiment", "in some embodiments", "according to an embodiment", "according to embodiments", etc. refer to general teachings of preferred embodiments which are combinable with each other, if not otherwise stated and not mutually exclusive. Said expressions are therefore not intended as explicitly listing a specific delimited combination of features. Features of embodiments are therefore combinable with features of other embodiments described herein.

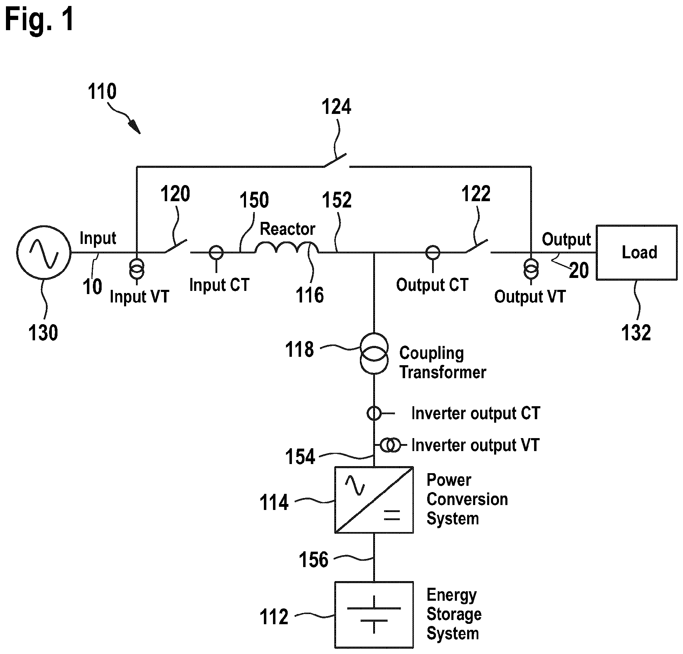

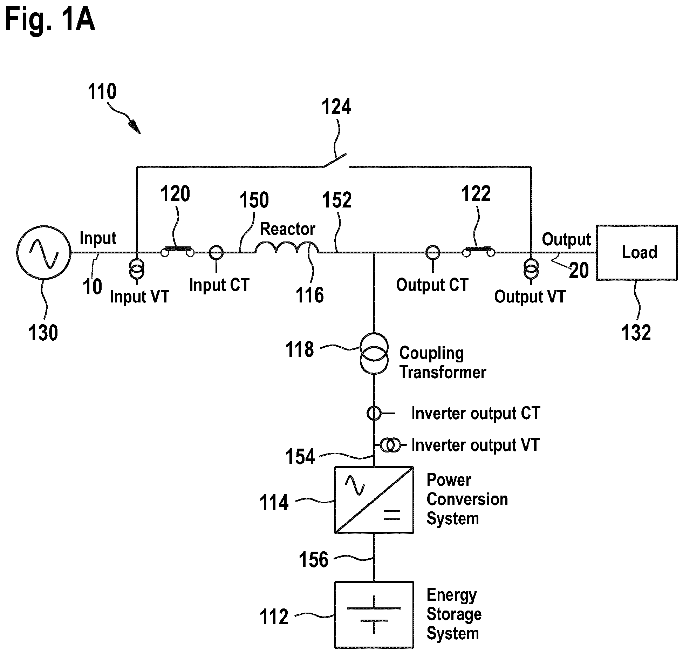

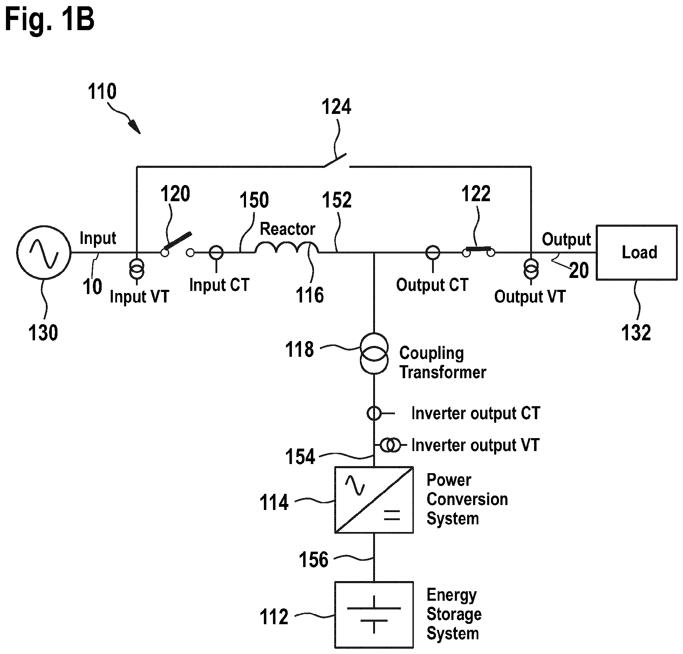

FIG. 1 shows an Impedance Isolated Single Conversion (ZISC) topology uninterruptible power supply (UPS) system 110 according to embodiments of the present disclosure, in the following denoted as ZISC UPS system. The ZISC UPS system 110 includes an energy storage system 112, a power conversion system 114, and a reactor 116. The ZISC UPS system 110 may further include a coupling transformer 118.The Impedance Isolated Single Conversion (ZISC) topology uninterruptible power supply (UPS) system 110 further includes an input switch 120, an output switch 122, and a bypass switch 124. The Impedance Isolated Single Conversion (ZISC) topology uninterruptible power supply (UPS) system 110 is coupled to an electric grid 130 and to an electric load 132. The electric grid and the electric load are not part of the UPS system as such, but are described and illustrated to explain the function of the UPS system according to embodiments of the present disclosure. The reactor 116 has a grid side terminal 150 and a load side terminal 152. The power conversion system 114 has an AC terminal 154 and a DC terminal 156. The load side terminal of the reactor 152 may be coupled to the AC terminal of the power conversion system 154, in particular via the coupling transformer 118. The DC terminal 156 of the power conversion system 114 is coupled to the energy storage system 112. The electric grid 130 may be coupled to the grid side terminal 150 of the reactor 116 when the input switch 120 is closed. The load 132 may be coupled to the load side terminal 152 of the reactor 116 when the output switch 122 is closed. When the bypass switch 124 is closed the electric grid 130 may be coupled directly to the electric load 132. For example, when both the input switch 120 and the output switch 122 are opened and the bypass switch 124 is closed, the ZISC based UPS system 110 may be effectively bypassed. The energy storage system is configured to provide a DC voltage at the DC terminal 156. A negative terminal of the energy storage system may be connected to ground. The load 132 may be formed by one or more protected loads coupled together and/or by low voltage distribution transformers distributing power received from the ZISC based UPS towards protected loads.

An input terminal 10 of the ZISC UPS system 110 couples the grid 130 to the input switch 120 and an output terminal 20 of the ZISC UPS system 110 couples the load 132 to the output switch 122.The input switch 120, the output switch 122, and the bypass switch 124 are controlled by a system controller that is also configured to control the power conversion system 114 based for example on voltage and/or currents measured at the input terminal and/or the output terminal and/or at the AC terminal 154 of the power conversion system 114 and/or based on currents flowing through the reactor 116.

The system controller may be further configured to determine a state of charge of the energy storage system and/or to determine and/or measure a voltage at the DC terminal 156 of the energy storage system 112. Voltage (VT) and/or current (CT) sensors may be used in order to determine currents and voltages in the ZISC UPS system 110.

FIG. 1A shows a ZISC based UPS operating in power conditioning mode according to embodiments of the present disclosure. When both the input switch 120 and the output switch 122 are closed and the bypass switch 124 is open, the ZISC based UPS system 110 may be effectively used to condition power in a power conditioning mode (PCM).

FIG. 1B shows a ZISC based UPS operating in independent mode according to embodiments of the present disclosure. When the input switch 120 is open and the output switch 122 is closed and the bypass switch 124 is open, the ZISC based UPS system 110 may be used to deliver power to the load 132 operating in an independent mode (IM), for example in case of a power outage in the grid 130. In the independent mode therefore, the ZISC based UPS system 110 is disconnected from the grid 130 and operates in island mode to supply power to the load 132. In independent mode the grid does not provide power to the load.

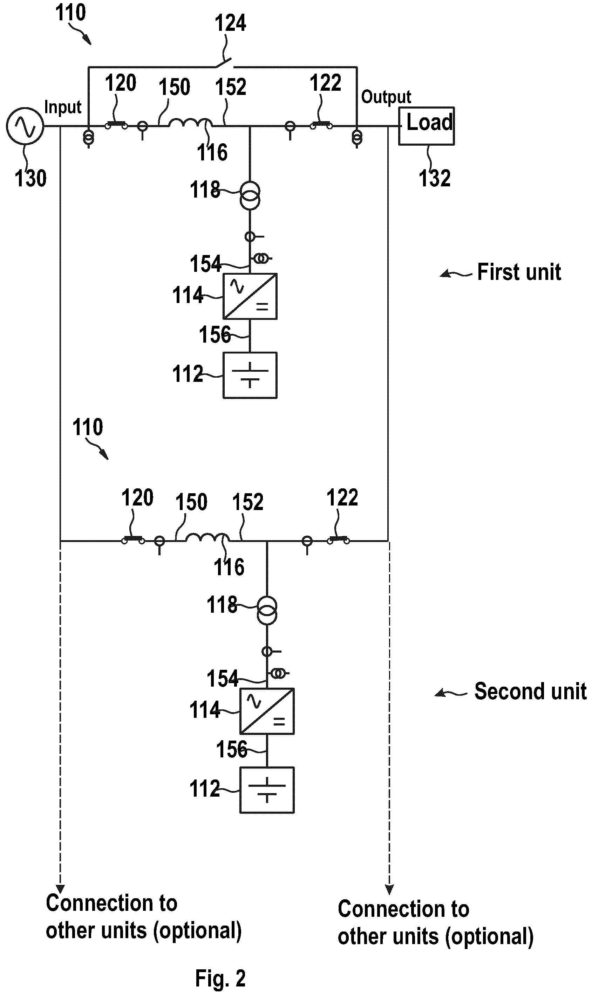

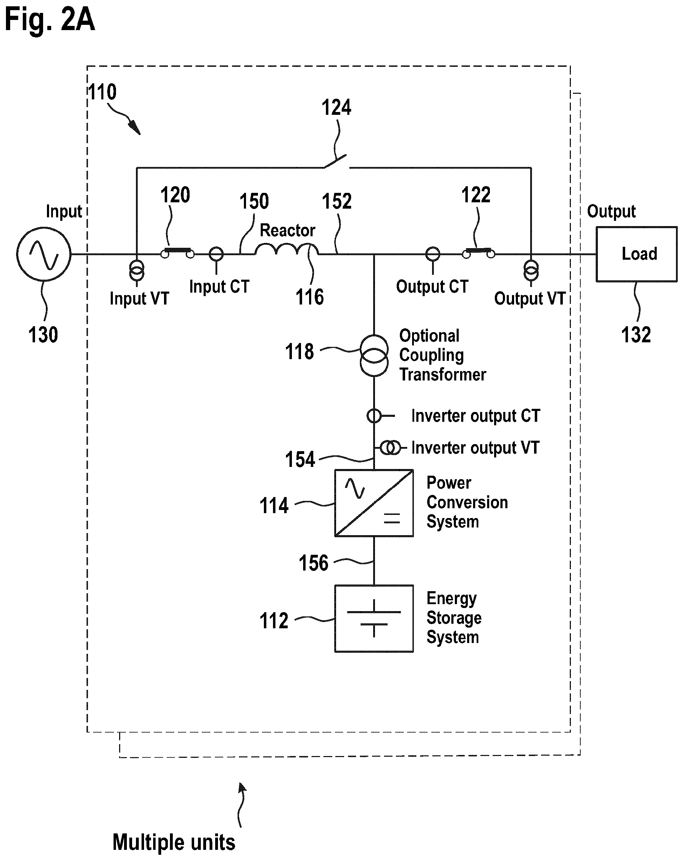

A plurality of ZISC based UPS may be connected in parallel, e.g. in a hard-parallel configuration. The input and output voltages of each of the UPS systems connected in the hard-parallel configuration is the same, whereas the total current provided to the load(s) is the sum of the currents that each UPS system provides towards the load(s) and also the current that the grid provides towards the plurality of the UPS systems connected in parallel is the sum of the currents received by each of the UPS systems in the plurality by the grid.FIG. 2 shows a plurality of ZISC based UPS systems in a hard-parallel configuration operating in power conditioning mode according to embodiments of the present disclosure, i.e. wherein for all the UPS systems in the plurality both the input switch and the output switch are closed. The plurality of ZISC based UPS systems may comprise a first ZISC based UPS system forming a first unit of the plurality, a second ZISC based UPS system forming a second unit of the plurality and optionally any number of additional ZISC based UPS systems forming additional units of the plurality. All the input terminals of the individual ZISC based systems in the hard-parallel configuration are electrically connected together in order to form a single input coupled to the electric grid 130. All the output terminals of the individual ZISC based systems in the hard-parallel configuration are electrically connected together in order to form a single output coupled to the electric load 132.Therefore all input terminals of the different units in the hard-parallel configuration are coupled together forming an input coupled to the grid 130.All output terminals of the different units in the hard-parallel configuration are coupled together forming an output coupled to the load 132. The electric grid and the electric load are not part of the UPS systems as such, but are described and illustrated to explain the function of the plurality of UPS systems in the hard-parallel configuration according to embodiments of the present disclosure.

A single bypass switch 124 is sufficient to bypass the plurality of ZISC based UPS systems in the hard-parallel configuration. A bypass switch can therefore be omitted for the second unit and all other units except for the first unit.

Furthermore, the whole plurality ZISC based UPS units (i.e. the first unit, the second unit and any further unit in the hard-parallel configuration) may be connected to the grid 130 and/or the load 132 via coupling transformers (not shown in the figures), e.g. via a single input coupling transformer that connects all units to the grid and/or via a single output coupling transformer that connects all units to the load. Alternatively, or in addition, each unit, i.e. each ZISC based UPS system in the plurality of ZISC based UPS systems in the hard-parallel configuration may have a dedicated transformer (not shown in the figures) that couples the unit to the grid and/or a dedicated transformer (not shown in the figures) that couples the unit to the load.

Analogously, a common input voltage sensor and/or a common output voltage sensor may measure the input voltage and/or the output voltage respectively of all the units in the hard-parallel configuration. Alternatively, each unit may have a dedicated input and/or output voltage sensor.

Multiple ZISC based UPS system connected in a hard-parallel configuration and operating in power conditioning mode are capable of effectively and continuously condition and filter grid disturbances like for example voltage and/or current imbalances and in particular disturbances like spikes that last for example only for a very short period.

In addition, the plurality of ZISC based UPS systems connected in the hard-parallel configuration can provide demand response functionality and, for example, the load may receive part of the power by the grid and part of the power by the plurality of energy storage systems in the units connected in parallel.

In hard-parallel operation, the load current is shared between each UPS unit, typically equally in the case of identical UPS units. In cases where a UPS in the system is inoperative, the remaining UPSs are able to take over supply to the protected loads without interruption.

Furthermore, whilst the system is in PCM, it is advantageous to have the ability to operate the UPS with an Energy Storage System (ESS) like functionality that allows stranded energy storage capacity to be utilized for grid support activities. This provides an opportunity to reduce and/or shift the energy consumption when called upon by the electric utility. This is achieved by exporting or importing active power from/to the energy storage system of the UPS. To achieve this operation, a Demand Response (DR) power controller is required.

For example, as power generators may generate electricity from intermittent sources of energy, such as wind and solar renewable energy sources, a demand-response functionality is beneficial in supporting reliable power towards the protected load, such that the plurality of ZISC based UPS systems in the hard-parallel configuration contribute in part in powering the load when the grid alone cannot provide adequate and reliable power (and/or at times when the cost of electric energy may be prohibitively high) while the energy storage systems are charged again when plenty of power is available from renewable sources (and/or at lower cost).

For example, when the load requires a given amount of power and a demand response functionality is enabled, then a power set point may determine how much power is provided in total by the plurality of the ZISC based UPS systems in the hard-parallel configuration towards the load while the remaining power still comes from the grid.

For example, for a load that requires 2.5 MW, when the demand response functionality is enabled and a power setpoint of 500 kW is received, then the units in the hard-parallel connection may in total provide 500 kW from the plurality of energy storage systems while the grid still delivers 2.5 - 0.5 = 2 MW to the load.

In times when then enough power is available e.g. from renewable energy sources and/or based on the power that the grid can deliver and/or based on cost, then the energy storage systems of the units in the hard-parallel configuration may be conveniently charged again.

Therefore, multiple ZISC based UPS systems in a hard-parallel configuration implement a grid support function in order to continuously counteract sudden voltage and/or fluctuations and/or to support a stable frequency and in addition may provide in part power towards the load while the grid provides the remaining part of the power needed by the load thereby implementing a demand response functionality wherein power is transferred to or from the energy storage system towards the load and/or towards the grid based on grid conditions and/or in order to adapt and/or reduce and/or shift energy consumptions to times more convenient for the electric utility and/or the consumer, e.g. when plenty of renewable energy sources are operative.

According to embodiments of the present disclosure, each single ZISC based UPS system in the plurality of ZISC based UPS systems connected in a hard-parallel configuration is controlled by an individual controller, i.e. each unit in the hard-parallel configuration is controlled by a dedicated unit controller. Nevertheless, the controllers of the individual ZISC based UPS systems in the plurality may communicated with each other for example over a common communication bus in particular sharing information about a state of charge of the respective energy storage system and/or about a voltage of the respective energy storage system.

For example, the controller of the first unit in Fig. 2 may share with all other controllers of all other units via a common communication bus information about the state of charge of the energy storage system and/or about the DC voltage of the DC terminal of the first unit, and in particular the controller of the second unit may receive data about the state of charge of the energy storage system of the first unit and/or about the DC voltage of the DC terminal of the first unit and/or of any additional unit that may be present.

For example, the controller of the second unit in Fig. 2 may share with all other controllers of all other units via a common communication bus information about the state of charge of the energy storage system and/or about the DC voltage of the DC terminal of the second unit, and in particular the controller of the first unit may receive data about the state of charge of the energy storage system of the second unit and/or about the DC voltage of the DC terminal of the second unit and/or of any additional unit that may be present.

Analogously for all the units in the plurality, wherein the respective controller of the unit may communicate data about state of charge and/or about DC terminal voltage to the controllers of all the other units via the common communication bus (not shown in the figure).

FIG. 2A shows a plurality of ZISC based UPS systems in a hard-parallel configuration operating in power conditioning mode according to embodiments of the present disclosure. A more compact illustration shows that multiple units are present in a hard-parallel configuration, with input terminals of the individual units coupled to provide a single overall input and output terminals of the individual units coupled to provide a single overall output.

When controlling the plurality of ZISC based UPS systems, each energy storage system of each system/unit in the plurality should remain within safe operating limits. For example, when the state of charge and/or the DC voltage of the energy storage system of a unit reaches a maximum threshold value, that may depend on a past history of charging and discharging along a hysteresis loop thereby forming a maximum hysteresis threshold, then further increasing the state of charge and/or the voltage of said energy storage system may result in significant stress or damage.

Alternatively or in addition, when the state of charge and/or the DC voltage of the energy storage system of a unit reaches a minimum threshold value, that may depend on a past history of charging and discharging along a hysteresis loop thereby forming a minimum hysteresis threshold, then further decreasing the state of charge and/or the voltage of said energy storage system may result in significant stress or damage.

To avoid said stress or damage, it may be possible to individually disconnect the single unit in the plurality of units connected in the hard-parallel configuration from the grid and/or from the load, individually controlling the input switch and/or output switch of said unit. But said disconnection may be disadvantageous in order to provide adequate power conditioning and/or demand response functionality in a convenient manner.

It may be therefore disadvantageous to disconnect a whole UPS system of the plurality when operating in power conditioning mode and/or when providing a demand response (DR) functionality.

In hard parallel system, it's beneficial that all UPSs are operating in the same manner during normal operation (in particular when providing demand response functionality and/or in power conditioning mode) to avoid loss of synchronization that may trip the system and drop the load. In particular, the main application of medium voltage (MV) USP is to protect critical loads such as AI data centers.

It is therefore convenient that a ZISC based UPS operates providing a fast and reliable response in reaction to a grid disturbance or in reaction to a demand/response request.

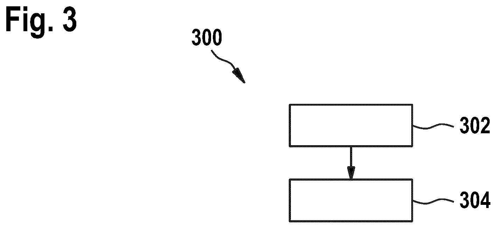

The present disclosure provides a method 300 according to FIG. 3 for controlling a plurality of uninterruptible power supply systems having an impedance isolated single conversion topology connected in a hard-parallel configuration coupled to an electric grid and configured to protect an electric load, wherein each uninterruptible power supply system comprises an energy storage system, a power conversion system, a coupling transformer, a series reactor, switches, voltage and current sensors, and a system controller capable of providing demand response functionality, each uninterruptible power supply system being configured to implement an impedance isolated single converter topology configured to operate in a power conditioning mode and in an independent mode, the method comprising:
- for each uninterruptible power supply system in the plurality of uninterruptible power supply systems connected in the hard-parallel configuration, determining 302 a state of charge of the energy storage system and/or a voltage of the energy storage system using the voltage sensors;
- if for any uninterruptible power supply system in the plurality of uninterruptible power supply systems connected in the hard-parallel configuration the determined state of charge of the energy storage system and/or the voltage of the energy storage system is below a respective minimum hysteresis threshold and the grid voltage remains within acceptable operational limits, controlling 304 all the uninterruptible power supply systems in the plurality of uninterruptible power supply systems connected in the hard-parallel configuration to charge each respective energy storage system at a respective predetermined power setpoint to increase the state of charge and/or the voltage of the energy storage system.

The grid voltage is in particular within acceptable operational limits if the grid is able to supply enough power towards the load and the voltage level conforms to required specifications, i.e. in particular when a voltage sag is not present or may be within tolerable limits.

The grid voltage conversely is not within acceptable operational limits if a voltage sag with significant magnitude and duration (according to predefined specifications) is observed and in particular in case of an open circuit resulting in the absence of connection to the grid.

The grid voltage may be measured or determined using one or more sensors of the plurality of UPS systems, for example a voltage sensor, e.g. an input voltage sensor.

The acceptable operational limits of the grid voltage and/or what constitutes a voltage sag with significant magnitude and duration may be defined for example in terms of the ITIC (Information Technology Industry Council) curve. The acceptable operational limits and/or an unacceptable voltage sag may be defined both in terms of a percentage of the nominal voltage and the duration of a deviation from the nominal voltage.

Charging all the uninterruptible power supply systems in the plurality ensures synchronicity of operation, thereby preventing or reducing circulating currents.

During charging, a demand response functionality that provides power to the load from the energy storage systems of the uninterruptible power supply systems (in addition to power that the grid provides to the load) may be temporarily disabled, given that an energy storage system cannot provide power while being charged (i.e. while simultaneously receiving power).

Some embodiments, alternatively or in addition, further provide:
- if for any uninterruptible power supply system in the plurality of uninterruptible power supply systems connected in the hard-parallel configuration the determined state of charge of the energy storage system and/or the voltage of the energy storage system is above a respective maximum hysteresis threshold, controlling all the uninterruptible power supply systems in the plurality of uninterruptible power supply systems connected in the hard-parallel configuration to stop or inhibit a charging of each respective energy storage system;
- disabling a demand response functionality for all uninterruptible power supply systems in the plurality of uninterruptible power supply systems connected in the hard-parallel configuration, if for at least one uninterruptible power supply system in the plurality the determined voltage and/or state of charge is below a minimum hysteresis threshold and at the same time for at least one uninterruptible power supply system in the plurality the voltage and/or state of charge of the energy storage system is above a maximum hysteresis threshold, in particular wherein each uninterruptible power supply system is controlled individually based on the respective voltage and/or state of charge of the energy storage system.

The charging is therefore optimally terminated, in particular when for example one energy storage system in the plurality reaches a maximum threshold.

Should at the same time some energy storage system in the plurality reach a maximum threshold while another energy storage system is at a minimum threshold it may be beneficial to control each uninterruptible power supply system individually, to align the charging state of each uninterruptible power supply system.

Some embodiments, alternatively or in addition, further provide:
- in case of a voltage sag of predetermined magnitude and/or of a duration and/or in case of a disconnection from the grid, control each uninterruptible power supply system in independent mode to supply electric power towards the protected load when the state of charge and/or voltage of the energy storage system is above a minimum trip threshold and to disconnect from both load and grid when the state of charge and/or voltage of the energy storage system is below the minimum trip threshold.

**In** particular, when an open circuit results in the absence of a connection towards the grid or in case of a voltage sag with significant magnitude (i.e. when predefined specifications of the quality of the voltage of the grid are not satisfied) then each uninterruptible power supply transitions to independent mode to supply power the protected loads whenever this is technically feasible, in particular when the state of charge and/or voltage of the energy storage system is still above a minimum trip threshold (that may be typically lower that the minimum hysteresis threshold during the charging chicle). Conversely, should also the minimum trip threshold be reached, the uninterruptible power supply system is disconnected from grid and load opening both input and output switches in order to prevent a damage. The minimum trip threshold is defined according to specifications of the uninterruptible supply system.

Some embodiments, alternatively or in addition, further provide:
- if for all uninterruptible power supply systems in the plurality of uninterruptible power supply systems the voltage and/or state of charge of the energy storage system is above a minimum hysteresis threshold, enabling a demand response functionality, in particular when the voltage and/or state of charge of all the energy storage systems of all the uninterruptible power supply systems in the plurality of uninterruptible power supply systems is above a predetermined adequate charging level.

Thereby it is ensured that each UPS in the plurality has enough energy stored in the energy storage system to adequately provide a demand response functionality, e.g. to adequately provide power towards the load from the energy storage system (in addition to power that the grid may still provide to the load) e.g. for an adequate time window.

What is considered adequate may for example be defined by specifications in function of the energy that (e.g. on average) is demanded by the load (in addition to e.g. the energy that the load receives on average from the grid on average in a predefined time window). An adequate level may be any (convenient) level above the minimum hysteresis threshold and below the maximum hysteresis threshold to ensure that the parallel UPS systems store enough energy.

Some embodiments, alternatively or in addition, further provide:
for each uninterruptible power supply system in the plurality of uninterruptible power supply systems connected in the hard-parallel configuration, changing the power setpoint as a ramp function with respect to time with a predetermined ramp rate.

This ensures a smooth adaption of the power setpoint to prevent e.g. undesired transients and/or oscillations.

Some embodiments, alternatively or in addition, further provide:
- controlling all uninterruptible power supply systems in the plurality of uninterruptible power supply systems connected in the hard-parallel configuration to inhibit a grid back-feed functionality when at least one uninterruptible power supply system does not allow a grid back-feed functionality.

Thereby again a synchronous operation is ensured.

Some embodiments, alternatively or in addition, further provide:
- disabling an uninterruptible power supply system in the plurality of uninterruptible power supply systems connected in a hard-parallel configuration when the uninterruptible power supply system is malfunctioning or requires maintenance while still allowing other uninterruptible power supply system providing demand response functionality; and enabling the uninterruptible power supply system once the malfunctioning is eliminated or the maintenance is terminated.

Thereby, in particular a sufficient demand response functionality is provided while still a synchronous operation is ensured.

In some embodiments, alternatively or in addition, controlling all the uninterruptible power supply systems is based on individually controlling each uninterruptible power supply system using the system controller of the uninterruptible power supply system based on all the determined states of charge and/or voltages of all the energy storage systems of all the uninterruptible power supply systems in the plurality.

In particular each controller may operate independently, but receiving the data about the state of charge and/or voltages of all the energy storage systems of all the UPS in the plurality via e.g. a common communication bus.

In some embodiments, the plurality of uninterruptible power supply systems comprises two or more uninterruptible power supply systems.

According to embodiments of methods and systems according to the present disclousre, a loss of synchronization is therefore advantageously prevented that may otherwise occur if the control of the UPS may be different for different UPS systems in the plurality, e.g. when some are charged and some others are discharged. Thereby circulating currents are also reduced or prevented.

In methods and systems according to embodiments of the present disclosure, the state of charge may be alternatively or in addition be determined based on voltage and current sensors of the plurality of ZISC based UPS systems for example comprising couloumb counting (current integration).

When the battery voltage or state of charge (of any unit in the hard-parallel configuration) goes below the minimum hysteresis threshold, the demand response functionality may be unavailable until the battery (of the unit) is sufficiently charged. The source of energy for charging the battery therefore comes from the grid.

Charging all uninterruptible power supply systems in the plurality of UPS systems in the hard-parallel configuration charges also in particular the UPS system(s) for which the determined state of charge and/or voltage of the energy storage system is below the minimum hysteresis threshold thereby preventing a damage or degradation of said energy storage system.

In particular, when an energy storage system goes below the minimum hysteresis threshold, the demand response functionality may be (temporarily) unavailable and all units in the parallel system will be charged at a predetermined power setpoint to maintain adequate state of charge or voltage of the energy storage system. Then the demand response functionality may be enabled again.

The plurality of UPS in the hard-parallel configuration may comprise two or more UPS systems.

For example, a (2+1) hard parallel configuration may support a 5MW load. If the rated power of each UPS is for example 2.5MVA, the whole hard parallel system can support for example a 2.5*3=7.5MW load. In normal operation, each UPS will share 1/3 of the total load and therefore running at 66.67% of its rated power. If one of the UPS has to stop for maintenance or stop due to malfunctioning, the remaining UPSs in the system still can support the total load. In this case, each remaining UPS will share 1/2 of the total load and running at 100% of its rated power. Thus, this exemplary hard parallel configuration advantageously offers redundancy.

The present disclosure also provides an electrical system comprising a plurality of uninterruptible power supply systems having an impedance isolated single conversion topology connected in a hard-parallel configuration configured to be coupled to an electric grid and configured to protect an electric load, wherein each uninterruptible power supply system comprises an energy storage system, a power conversion system, a coupling transformer, a series reactor, switches, voltage and current sensors, and a system controller capable of providing demand response functionality, each uninterruptible power supply system being configured to implement an impedance isolated single converter topology configured to operate in a power conditioning mode and in an independent mode, the system and the system controllers of the plurality of uninterruptible power supply systems configured such that:
- for each uninterruptible power supply system in the plurality of uninterruptible power supply systems connected in the hard-parallel configuration, a state of charge of the energy storage system and/or a voltage of the energy storage system is determined using the voltage sensors;
- if for any uninterruptible power supply system in the plurality of uninterruptible power supply systems connected in the hard-parallel configuration the determined state of charge of the energy storage system and/or the voltage of the energy storage system is below a respective minimum hysteresis threshold and the grid voltage remains within acceptable operational limits, all the uninterruptible power supply systems in the plurality of uninterruptible power supply systems connected in the hard-parallel configuration are controlled to charge each respective energy storage system at a respective predetermined power setpoint to increase the state of charge and/or the voltage of the energy storage system.

The grid voltage is in particular within acceptable operational limits if the grid is able to supply enough power towards the load and the voltage level conforms to required specifications, i.e. in particular when a voltage sag is not present or may be within tolerable limits.

The grid voltage conversely is not within acceptable operational limits if a voltage sag with significant magnitude and duration (according to predefined specifications) is observed and in particular in case of an open circuit resulting in the absence of connection to the grid.

The grid voltage may be measured or determined using one or more sensors of the plurality of UPS systems, for example a voltage sensor, e.g. an input voltage sensor.

The acceptable operational limits of the grid voltage and/or what constitutes a voltage sag with significant magnitude and duration may be defined for example in terms of the ITIC (Information Technology Industry Council) curve. The acceptable operational limits and/or an unacceptable voltage sag may be defined both in terms of a percentage of the nominal voltage and the duration of a deviation from the nominal voltage.

Charging all the uninterruptible power supply systems in the plurality ensures synchronicity of operation, thereby preventing or reducing circulating currents.

In some embodiments, alternatively or in addition, the system controllers of the plurality of uninterruptible power supply systems are further configured such that:
- if for any uninterruptible power supply system in the plurality of uninterruptible power supply systems connected in the hard-parallel configuration the determined state of charge of the energy storage system and/or the voltage of the energy storage system is above a respective maximum hysteresis threshold, all the uninterruptible power supply systems in the plurality of uninterruptible power supply systems connected in the hard-parallel configuration are controlled to stop or inhibit a charging of each respective energy storage system;
- a demand response functionality is disabled for all uninterruptible power supply systems in the plurality of uninterruptible power supply systems connected in the hard-parallel configuration, if for at least one uninterruptible power supply system in the plurality the determined voltage and/or state of charge is below a minimum hysteresis threshold and at the same time for at least one uninterruptible power supply system in the plurality the voltage and/or state of charge of the energy storage system is above a maximum hysteresis threshold, in particular wherein each uninterruptible power supply system is controlled individually based on the respective voltage and/or state of charge of the energy storage system.

The charging is therefore optimally terminated, in particular when for example one energy storage system in the plurality reaches a maximum threshold.

Should at the same time some energy storage system in the plurality reach a maximum threshold while another energy storage system is at a minimum threshold it may be beneficial to control each uninterruptible power supply system individually, to align the charging state of each uninterruptible power supply system.

In some embodiments, the system controllers of the plurality of uninterruptible power supply systems are further configured such that:
- in case of a voltage sag of predetermined magnitude and/or of a duration and/or in case of a disconnection from the grid, each uninterruptible power supply system is controlled in independent mode to supply electric power towards the protected load when the state of charge and/or voltage of the energy storage system is above a minimum trip threshold and to disconnect from both load and grid when the state of charge and/or voltage of the energy storage system is below the minimum trip threshold.

In particular, when an open circuit results in the absence of a connection towards the grid or in case of a voltage sag with significant magnitude (i.e. when predefined specifications of the quality of the voltage of the grid are not satisfied) then each uninterruptible power supply transitions to independent mode to supply power the protected loads whenever this is technically feasible, in particular when the state of charge and/or voltage of the energy storage system is still above a minimum trip threshold (that may be typically lower that the minimum hysteresis threshold during the charging chicle). Conversely, should also the minimum trip threshold be reached, the uninterruptible power supply system is disconnected from grid and load opening both input and output switches in order to prevent a damage. The minimum trip threshold is defined according to specifications of the uninterruptible supply system.

In some embodiments, alternatively or in addition, the system controllers of the plurality of uninterruptible power supply systems are further configured such that:
- if for all uninterruptible power supply systems in the plurality of uninterruptible power supply systems the voltage and/or state of charge of the energy storage system is above a minimum hysteresis threshold, a demand response functionality is enabled, in particular when the voltage and/or state of charge of all the energy storage systems of all the uninterruptible power supply systems in the plurality of uninterruptible power supply systems is above a predetermined adequate charging level.

Thereby it is ensured that each UPS in the plurality has enough energy stored in the energy storage system to adequately provide a demand response functionality, e.g. to adequately provide power towards the load from the energy storage system (in addition to power that the grid may still provide to the load) e.g. for an adequate time window.

What is considered adequate may for example be defined by specifications in function of the energy that (e.g. on average) is demanded by the load (in addition to e.g. the energy that the load receives from the grid on average in a predefined time window). An adequate level may be any (convenient) level above the minimum hysteresis threshold and below the maximum hysteresis threshold to ensure that the parallel UPS systems store enough energy.

In some embodiments, alternatively or in addition, the system controllers of the plurality of uninterruptible power supply systems are further configured such that:
for each uninterruptible power supply system in the plurality of uninterruptible power supply systems connected in the hard-parallel configuration, changing the power setpoint as a ramp function with respect to time with a predetermined ramp rate.

In some embodiments, alternatively or in addition, the system is further configured such that one or more of the following is implemented:
- all uninterruptible power supply systems in the plurality of uninterruptible power supply systems connected in the hard-parallel configuration are controlled to inhibit a grid back-feed functionality when at least one uninterruptible power supply system does not allow a grid back-feed functionality;
- an uninterruptible power supply system in the plurality of uninterruptible power supply systems connected in a hard-parallel configuration is disabled when the uninterruptible power supply system is malfunctioning or requires maintenance while still allowing other uninterruptible power supply system providing demand response functionality; and the uninterruptible power supply system is enabled once the malfunctioning is eliminated or the maintenance is terminated;
- controlling all the uninterruptible power supply systems is based on individually controlling each uninterruptible power supply system using the system controller of the uninterruptible power supply system based on all the determined states of charge and/or voltages of all the energy storage systems of all the uninterruptible power supply systems in the plurality;

in particular wherein the plurality of uninterruptible power supply systems comprises two or more uninterruptible power supply systems.

In systems and methods according to embodiments of the present disclosure, in particular each controller may operate independently, but receiving the data about the state of charge and/or voltages of all the energy storage systems of all the UPS in the plurality via e.g. a common communication bus.

Therefore, the systems and methods according to embodiments of the present disclosure are configured such that when the battery voltage or state of charge goes below the minimum hysteresis threshold, the demand response functionality may be (temporarily) unavailable and/or disabled until the battery is sufficiently charged. The source of energy for charging the battery therefore comes from the grid.

In particular, according to embodiments of the present disclosure, when an energy storage system goes below the minimum hysteresis threshold, the demand response functionality will be unavailable and all units in the parallel system will be charged at a predetermined power setpoint to maintain adequate state of charge or voltage of the energy storage system.

During charging, a demand response functionality that provides power to the load from the energy storage systems of the uninterruptible power supply systems (in addition to power that the grid provides to the load) may be temporarily disabled, given that an energy storage system cannot provide power while being charged (i.e. while simultaneously receiving power).

According to embodiments of the present disclosure, a loss of synchronization is therefore advantageously prevented that may otherwise occur if the control of the UPS may be different for different UPS systems in the plurality, e.g. when some are charged and some others are discharged.

The system according to embodiments of the present disclosure may be in particular configured to carry out the methods described in the present disclosure and therefore the same advantages are provided.

Each UPS system in the plurality of UPS systems in the hard-parallel configuration may have a controller implementing the described methods, each controller exchanging data with the other controllers over a common communication bus in particular about the state of charge and/or voltage of the respective energy storage systems. Thereby all controllers of all the UPS may have knowledge about the state of charge and/or voltage of each UPS system and/or about said state of charge and/or voltage being above a maximum hysteresis threshold and/or below a minimum hysteresis threshold.

The individual controllers as a whole may therefore implement methods according to embodiments of the present disclosure.

In particular following functionality may be, alternatively or in addition to the described functionalities, further provided according to some embodiments of the present disclosure:
- IF ((any unit in the plurality has battery state of charge or voltage below the minimum hysteresis threshold) AND (there is NOT a grid power outage)) THEN ((all units are charged using the power of the grid) AND (a demand response functionality is not available) AND (the grid also provides all the power to the protected load)).
- IF ((any unit in the plurality has battery state of charge or voltage above the maximum hysteresis threshold) AND (there is NOT a grid power outage)) THEN ((all units are NOT charged, i.e. inhibited from charging) AND (a demand response functionality is available)).
- IF (there is a grid power outage) THEN (all units are operated in independent mode and provide power to the load when the respective battery is above the minimum trip threshold).

Embodiments of methods and systems of the present disclosure therefore maximize the possibility to provide demand response functionality while protecting the critical loads and preventing degradation or damage of the energy storage systems in the plurality of units in the hard-parallel configuration.

Embodiments of methods and systems improve the synchronization of the operation of uninterruptible power supply systems in a hard-parallel configuration and thereby also prevent or reduce circulating currents.

## Claims

1. A method for controlling a plurality of uninterruptible power supply systems having an impedance isolated single conversion topology connected in a hard-parallel configuration coupled to an electric grid and configured to protect an electric load, wherein each uninterruptible power supply system comprises an energy storage system, a power conversion system, a coupling transformer, a series reactor, switches, voltage and current sensors, and a system controller capable of providing demand response functionality, each uninterruptible power supply system being configured to implement an impedance isolated single converter topology configured to operate in a power conditioning mode and in an independent mode, the method comprising:
- for each uninterruptible power supply system in the plurality of uninterruptible power supply systems connected in the hard-parallel configuration, determining a state of charge of the energy storage system and/or a voltage of the energy storage system using the voltage sensors;
- if for any uninterruptible power supply system in the plurality of uninterruptible power supply systems connected in the hard-parallel configuration the determined state of charge of the energy storage system and/or the voltage of the energy storage system is below a respective minimum hysteresis threshold and the grid voltage remains within acceptable operational limits, controlling all the uninterruptible power supply systems in the plurality of uninterruptible power supply systems connected in the hard-parallel configuration to charge each respective energy storage system at a respective predetermined power setpoint to increase the state of charge and/or the voltage of the energy storage system.

2. The method of claim 1 further comprising:
- if for any uninterruptible power supply system in the plurality of uninterruptible power supply systems connected in the hard-parallel configuration the determined state of charge of the energy storage system and/or the voltage of the energy storage system is above a respective maximum hysteresis threshold, controlling all the uninterruptible power supply systems in the plurality of uninterruptible power supply systems connected in the hard-parallel configuration to stop or inhibit a charging of each respective energy storage system;
- disabling a demand response functionality for all uninterruptible power supply systems in the plurality of uninterruptible power supply systems connected in the hard-parallel configuration, if for at least one uninterruptible power supply system in the plurality the determined voltage and/or state of charge is below a minimum hysteresis threshold and at the same time for at least one uninterruptible power supply system in the plurality the voltage and/or state of charge of the energy storage system is above a maximum hysteresis threshold, in particular wherein each uninterruptible power supply system is controlled individually based on the respective voltage and/or state of charge of the energy storage system.

3. The method of any of claims from 1 to 2 further comprising:
- in case of a voltage sag of predetermined magnitude and/or of a duration and/or in case of a disconnection from the grid, control each uninterruptible power supply system in independent mode to supply electric power towards the protected load when the state of charge and/or voltage of the energy storage system is above a minimum trip threshold and to disconnect from both load and grid when the state of charge and/or voltage of the energy storage system is below the minimum trip threshold.

4. The method of any of claims from 1 to 3, further comprising:
- if for all uninterruptible power supply systems in the plurality of uninterruptible power supply systems the voltage and/or state of charge of the energy storage system is above a minimum hysteresis threshold, enabling a demand response functionality, in particular when the voltage and/or state of charge of all the energy storage systems of all the uninterruptible power supply systems in the plurality of uninterruptible power supply systems is above a predetermined adequate charging level.

5. The method of any of claims from 1 to 4, further comprising:
for each uninterruptible power supply system in the plurality of uninterruptible power supply systems connected in the hard-parallel configuration, changing the power setpoint as a ramp function with respect to time with a predetermined ramp rate.

6. The method of any of claims from 1 to 5 further comprising:
- controlling all uninterruptible power supply systems in the plurality of uninterruptible power supply systems connected in the hard-parallel configuration to inhibit a grid back-feed functionality when at least one uninterruptible power supply system does not allow a grid back-feed functionality.

7. The method of any of claims from 1 to 6, further comprising: disabling an uninterruptible power supply system in the plurality of uninterruptible power supply systems connected in a hard-parallel configuration when the uninterruptible power supply system is malfunctioning or requires maintenance while still allowing other uninterruptible power supply systems to provide demand response functionality; and enabling the uninterruptible power supply system once the malfunctioning is eliminated or the maintenance is terminated.

8. The method of any of claims from 1 to 7, wherein controlling all the uninterruptible power supply systems is based on individually controlling each uninterruptible power supply system using the system controller of the uninterruptible power supply system based on all the determined states of charge and/or voltages of all the energy storage systems of all the uninterruptible power supply systems in the plurality.

9. The method of any of claims from 1 to 8, wherein the plurality of uninterruptible power supply systems comprises two or more uninterruptible power supply systems.

10. An electrical system comprising a plurality of uninterruptible power supply systems having an impedance isolated single conversion topology connected in a hard-parallel configuration configured to be coupled to an electric grid and configured to protect an electric load, wherein each uninterruptible power supply system comprises an energy storage system, a power conversion system, a coupling transformer, a series reactor, switches, voltage and current sensors, and a system controller capable of providing demand response functionality, each uninterruptible power supply system being configured to implement an impedance isolated single converter topology configured to operate in a power conditioning mode and in an independent mode, the system and the system controllers of the plurality of uninterruptible power supply systems configured such that:
- for each uninterruptible power supply system in the plurality of uninterruptible power supply systems connected in the hard-parallel configuration, a state of charge of the energy storage system and/or a voltage of the energy storage system is determined using the voltage sensors;
- if for any uninterruptible power supply system in the plurality of uninterruptible power supply systems connected in the hard-parallel configuration the determined state of charge of the energy storage system and/or the voltage of the energy storage system is below a respective minimum hysteresis threshold and the grid voltage remains within acceptable operational limits, all the uninterruptible power supply systems in the plurality of uninterruptible power supply systems connected in the hard-parallel configuration are controlled to charge each respective energy storage system at a respective predetermined power setpoint to increase the state of charge and/or the voltage of the energy storage system.

11. The system of claim 10, wherein the system controllers of the plurality of uninterruptible power supply systems are further configured such that:
- if for any uninterruptible power supply system in the plurality of uninterruptible power supply systems connected in the hard-parallel configuration the determined state of charge of the energy storage system and/or the voltage of the energy storage system is above a respective maximum hysteresis threshold, all the uninterruptible power supply systems in the plurality of uninterruptible power supply systems connected in the hard-parallel configuration are controlled to stop or inhibit a charging of each respective energy storage system;
- a demand response functionality is disabled for all uninterruptible power supply systems in the plurality of uninterruptible power supply systems connected in the hard-parallel configuration, if for at least one uninterruptible power supply system in the plurality the determined voltage and/or state of charge is below a minimum hysteresis threshold and at the same time for at least one uninterruptible power supply system in the plurality the voltage and/or state of charge of the energy storage system is above a maximum hysteresis threshold, in particular wherein each uninterruptible power supply system is controlled individually based on the respective voltage and/or state of charge of the energy storage system.

12. The system of any of claims from 10 to 11, wherein the system controllers of the plurality of uninterruptible power supply systems are further configured such that:
- in case of a voltage sag of predetermined magnitude and/or of a duration and/or in case of a disconnection from the grid, each uninterruptible power supply system is controlled in independent mode to supply electric power towards the protected load when the state of charge and/or voltage of the energy storage system is above a minimum trip threshold and to disconnect from both load and grid when the state of charge and/or voltage of the energy storage system is below the minimum trip threshold.

13. The system of any of claims from 10 to 12, wherein the system controllers of the plurality of uninterruptible power supply systems are further configured such that:
- if for all uninterruptible power supply systems in the plurality of uninterruptible power supply systems the voltage and/or state of charge of the energy storage system is above a minimum hysteresis threshold, a demand response functionality is enabled, in particular when the voltage and/or state of charge of all the energy storage systems of all the uninterruptible power supply systems in the plurality of uninterruptible power supply systems is above a predetermined adequate charging level.

14. The system of any of claims from 10 to 13, wherein the system controllers of the plurality of uninterruptible power supply systems are further configured such that:
for each uninterruptible power supply system in the plurality of uninterruptible power supply systems connected in the hard-parallel configuration, changing the power setpoint as a ramp function with respect to time with a predetermined ramp rate.

15. The system of any of claims from 10 to 14 further configured such that:
- all uninterruptible power supply systems in the plurality of uninterruptible power supply systems connected in the hard-parallel configuration are controlled to inhibit a grid back-feed functionality when at least one uninterruptible power supply system does not allow a grid back-feed functionality;
- an uninterruptible power supply system in the plurality of uninterruptible power supply systems connected in a hard-parallel configuration is disabled when the uninterruptible power supply system is malfunctioning or requires maintenance while still allowing other uninterruptible power supply systems to provide demand response functionality; and the uninterruptible power supply system is enabled once the malfunctioning is eliminated or the maintenance is terminated;
- controlling all the uninterruptible power supply systems is based on individually controlling each uninterruptible power supply system using the system controller of the uninterruptible power supply system based on all the determined states of charge and/or voltages of all the energy storage systems of all the uninterruptible power supply systems in the plurality;
in particular wherein the plurality of uninterruptible power supply systems comprises two or more uninterruptible power supply systems.
